# EUROPEAN PATENT APPLICATION

(11) **EP 4 224 909 A1**
(43) Date of publication of application: **09.08.2023**
(21) Application number: 21874521.4
(22) Date of filing: 29.09.2021
(51) Int. Cl.: H04W 24/02

(54) **METHOD FOR CHANGING WORKING AREA, TERMINAL, AND NETWORK SIDE DEVICE**

(30) Priority: 29.09.2020 CN 202011053353
(71) Applicant: Vivo Mobile Communication Co., Ltd., Dongguan, Guangdong 523863 (CN)
(72) Inventor: WU, Yumin, Dongguan, Guangdong 523863 (CN)
(74) Representative: Murgitroyd & Company
(86) International application number: PCT/CN2021/121656
(87) International publication number: WO 2022/068866

(57) **Abstract**

This application discloses a method for changing a working area, a terminal, and a network-side device, and relates to the field of communication technologies. The method for changing a working area of this application includes: acquiring configuration information of a working area; working in a first working area according to the configuration information, the first working area being a working area in at least one working area indicated by the configuration information; and performing an operation of changing the first working area in a case that a trigger event is satisfied.

## Description

### CROSS-REFERENCE TO RELATED APPLICATIONS

This application claims priority to Chinese Patent Application No. 202011053353.X filed on September 29, 2020, which is incorporated herein by reference in its entirety.

### TECHNICAL FIELD

The present invention relates to the field of communication technologies, and in particular, to a method for changing a working area, a terminal, and a network-side device.

### BACKGROUND

In the related art, when user equipment (User Equipment, UE, also referred to as terminal) in an idle state or an inactive state is moving, a network will provide priorities of frequencies, and the UE performs cell selection/reselection and cell measurement according to the priorities of the frequencies. When there are a large number of small cells, frequent cell measurement and cell selection/reselection are required, which will cause high power consumption.

### SUMMARY

Embodiments of this application provide a method for changing a working area, a terminal, and a network-side device, which can resolve the problem of high power consumption caused by frequent cell measurement and cell selection/reselection performed by a terminal when moving.

According to a first aspect, a method for changing a working area is provided, applicable to a terminal, the method including:
acquiring configuration information of a working area;
working in a first working area according to the configuration information, the first working area being a working area in at least one working area indicated by the configuration information; and
performing an operation of changing the first working area in a case that a trigger event is satisfied.

According to a second aspect, a method for changing a working area is provided, applicable to a network-side device, the method including:
transmitting configuration information of a working area, the configuration information indicating at least one working area.

According to a third aspect, an apparatus for changing a working area is provided, applicable to a terminal, the apparatus including:
a first acquiring module, configured to acquire configuration information of a working area;
a working module, configured to work in a first working area according to the configuration information, the first working area being a working area in at least one working area indicated by the configuration information; and
a first changing module, configured to perform an operation of changing the first working area in a case that a trigger event is satisfied.

According to a fourth aspect, a terminal is provided, including a processor, a memory, and a program or instruction stored on the memory and executable on the processor, the program or instruction, when executed on the processor, implementing steps of the method according to the first aspect.

According to a fifth aspect, an apparatus for changing a working area is provided, applicable to a network-side device, the apparatus including:
a transmission module, configured to transmit configuration information of a working area, the configuration information indicating at least one working area.

According to a sixth aspect, a network-side device is provided, including a processor, a memory, and a program or instruction stored on the memory and executable on the processor, the program or instruction, when executed on the processor, implementing steps of the method according to the second aspect.

According to a seventh aspect, a readable storage medium is provided, storing a program or instruction, the program or instruction, when executed on a processor, implementing steps of the method according to the first aspect or the second aspect.

According to an eighth aspect, a chip is provided, including a processor and a communication interface, the communication interface being coupled to the processor, and the processor being configured to execute a program or instruction to implement steps of the method according to the first aspect or the second aspect.

In the embodiments of this application, acquire configuration information of a working area; work in a first working area according to the configuration information; and perform an operation of changing the first working area in a case that a trigger event is satisfied. Therefore, it can be ensured that the terminal can change the working area when moving, thereby achieving the purpose of supporting terminal mobility. In addition, when working in a working area indicated by configuration information, the terminal can only perform cell measurement, cell selection, or cell reselection in cells configured in the working area, without performing cell selection/reselection or cell measurement frequently on a large number of small cells, thereby reducing power consumption of the terminal when moving.

### BRIEF DESCRIPTION OF THE DRAWINGS

FIG. 1 is a structural diagram of a network system to which the embodiments of this application are applicable;
FIG. 2 is a first schematic flowchart of a method for changing a working area according to an embodiment of this application;
FIG. 3 is a second schematic flowchart of a method for changing a working area according to an embodiment of this application;
FIG. 4 is a first schematic diagram of modules of an apparatus for changing a working area according to an embodiment of this application;
FIG. 5 is a structural block diagram of a communication device according to an embodiment of this application;
FIG. 6 is a structural block diagram of a terminal according to an embodiment of this application;
FIG. 7 is a second schematic diagram of modules of an apparatus for changing a working area according to an embodiment of this application; and
FIG. 8 is a structural block diagram of a network-side device according to an embodiment of this application.

### DETAILED DESCRIPTION

The following clearly and completely describes the technical solutions in the embodiments of this application with reference to the accompanying drawings in the embodiments of this application. Apparently, the described embodiments are some of the embodiments of this application rather than all of the embodiments. All other embodiments obtained by a person of ordinary skill in the art based on the embodiments of this application fall within the protection scope of this application.

In the specification and claims of this application, the terms "first", "second", and the like are intended to distinguish between similar objects but do not indicate a particular order or sequence. It is to be understood that the data termed in such a way are interchangeable in proper circumstances, so that the embodiments of this application described herein can be implemented in other orders than the order illustrated or described herein. In addition, the objects distinguished by "first" and "second" are usually of the same type, and the quantity of the objects is not limited. For example, there may be one or more first objects. Moreover, "and/or" used in this specification and the claims represents at least one of the connected objects, and the character "/" generally indicates an "or" relationship between the associated objects.

It is to be noted that the technologies described in the embodiments of this application are not limited to a long term evolution (Long Term Evolution, LTE)/LTE-advanced (LTE-Advanced, LTE-A) system, and may further be applied to other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" may usually be used interchangeably in the embodiments of this application. The described technology can be applied to the systems and radio technologies above, and can also be applied to other systems and radio technologies. However, the new radio (New Radio, NR) system is described below for exemplary description, and NR terminology is used in most of the following description, although these techniques can also be applied to applications other than NR system applications, such as the 6th generation (6th Generation, 6G) communication system.

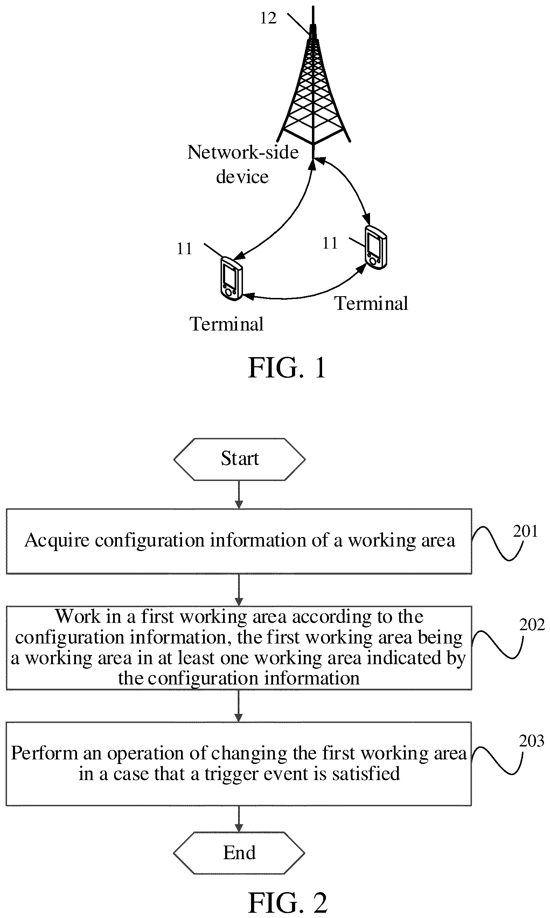

FIG. 1 is a block diagram of a wireless communication system to which the embodiments of this application are applicable. The communication system includes a terminal 11 and a network-side device 12. The terminal 11 may also be referred to as a terminal device or user equipment (User Equipment, UE). The terminal 11 may be a mobile phone, a tablet personal computer (Tablet Personal Computer), a laptop computer (Laptop Computer) also referred to as notebook computer, a personal digital assistant (Personal Digital Assistant, PDA), a handheld computer, a netbook, an ultra-mobile personal computer (ultra-mobile personal computer, UMPC), a mobile Internet device (Mobile Internet Device, MID), a wearable device (Wearable Device) or vehicle user equipment (VUE), pedestrian user equipment (PUE), or other terminal-side devices. The wearable device includes: smart bands, earphones, smart glasses, and the like. It is to be noted that, the specific type of the terminal 11 is not limited in the embodiments of this application. The network-side device 12 may be a base station or a core network. The base station may be referred to as access point, base transceiver station (Base Transceiver Station, BTS), radio base station, radio transceiver, basic service set (Basic Service Set, BSS), extended service set (Extended Service Set, ESS), Node B, evolved Node B (eNB), home Node B, home evolved Node B, WLAN access point, WiFi node, transmitting receiving point (Transmitting Receiving Point, TRP), or some other suitable term in the art. As long as the same technical effect is achieved, the base station is not limited to specific technical terms. It is to be noted that, only a base station in the NR system is used as an example in the embodiments of this application, but the specific type of the base station is not limited.

The following describes a method for changing a working area provided in the embodiments of this application in detail through specific embodiments and application scenarios thereof with reference to the accompanying drawings.

As shown in FIG. 2, an embodiment of this application discloses a method for changing a working area, applicable to a terminal, the method including the following steps.

Step 201. Acquire configuration information of a working area.

In this step, the configuration information of the working area may be configured for the terminal by a network-side device. Optionally, the configuration information is configured through dedicated signaling or broadcast signaling.

The terminal acquires the configuration information of the working area through dedicated signaling (for example, through a connection release message) or broadcast signaling (for example, through SIB information).

Use of the working area may include at least one of the following:
receiving a paging message;
cell selection or reselection (for example, UE only performs cell selection and reselection among cells configured in the specific working area);
camping on for UE (for example, UE only camps on cells configured in the specific working area); and
cell measurement (for example, UE only measures cells or frequencies configured in the specific working area).

Step 202. Work in a first working area according to the configuration information, the first working area being a working area in at least one working area indicated by the configuration information.

The configuration information indicates at least one working area. The terminal selects one working area from the at least one working area indicated by the configuration information as the first working area.

The terminal working in the first working area may be only receiving a paging message, performing cell selection or reselection, or performing cell measurement in cells configured in the first working area, without performing cell selection/reselection or cell measurement frequently on a large number of small cells, thereby reducing power consumption of the terminal.

Step 203. Perform an operation of changing the first working area in a case that a trigger event is satisfied.

In a case that the trigger event is satisfied, the operation of changing the first working area is performed, so that the working area can be changed when the terminal is moving, thereby achieving the purpose of supporting terminal mobility.

According to the method for changing a working area in this embodiment of this application, acquire configuration information of a working area; work in a first working area according to the configuration information; and perform an operation of changing the first working area in a case that a trigger event is satisfied. Therefore, it can be ensured that the terminal can change the working area when moving, thereby achieving the purpose of supporting terminal mobility. In addition, when working in a working area indicated by configuration information, the terminal can only perform cell measurement, cell selection, or cell reselection in cells configured in the working area, without performing cell selection/reselection or cell measurement frequently on a large number of small cells, thereby reducing power consumption of the terminal when moving.

Optionally, the configuration information includes at least one of the following:
at least one frequency identifier (such as fl);
resource location information for a reference signal corresponding to a frequency, such as a time location (time slot 1 or time slot 2), a frequency location, and/or a spatial location (such as an associated reference signal identifier);
a subcarrier spacing corresponding to a frequency (such as 15 KHz);
transmission location information for a paging message, such as a time location for a paging message to schedule a scheduling channel transmitted by a control signaling, and/or a time location for a data channel transmitted by a paging message, where the time location may alternatively be a frequency location or a spatial location; and
at least one working area identifier (such as frequency 1 pertaining to working area 1 and frequency 2 pertaining to working area 2).

Optionally, the at least one working area identifier satisfies at least one of the following:
one of the at least one working area identifier corresponding to at least one frequency identifier;
one of the at least one working area identifier corresponding to resource location information for at least one reference signal; and
one of the at least one working area identifier corresponding to transmission location information for at least one paging message.

Optionally, the reference signal includes at least one of the following types:
a synchronous signal block (Synchronous Signal Block, SSB); and
a channel state information-reference signaling (Channel State Information-Reference Signaling, CSI-RS).

Optionally, the reference signal includes information content of an identifier of a working area. That is, the reference signal is a reference signal generated according to an identifier of a working area.

Optionally, an association relationship between the transmission location information for the paging message and the location information for the reference signal is stipulated through a protocol or network-side configuration.

For example, a location of a scheduling channel scheduled by an i^{th} paging message in a paging period corresponds to location information for a j^{th} reference signal. Then, when the j^{th} reference signal is detected by UE, the scheduling information for the paging message is monitored in the scheduling channel scheduled by the i^{th} paging message.

Optionally, the working in a first working area includes at least one of the following:
receiving a paging message in the first working area;
performing cell selection or reselection in the first working area;
performing camping in the first working area;
performing cell measurement in the first working area;
performing initial access in the first working area; and
reading system information in the first working area.

Optionally, the trigger event includes at least one of the following:
a mismatch between information content of an identifier of a working area included in a detected target reference signal and information content of an identifier of the first working area, for example, a working area 1 and a working area 2 are configured by a network side for UE, the UE currently works in the working area 1, and the "information content of an identifier of a working area included in a reference signal" detected by the UE is the working area 2 (additionally, a measurement value (such as RSRP) of a reference signal of the working area 2 is also higher than an agreed threshold), then the UE changes the frequency and/or reference signal of the working area to a frequency and/or reference signal of the working area 2;
a mismatch between information content of an identifier of a working area included in a detected target reference signal and information content of identifiers of all working areas in the configuration information, for example, a working area 1 and a working area 2 are configured by a network side for UE, the UE currently works in the working area 1, and an identifier of a working area included in a target reference signal detected by the UE is neither the working area 1 nor the working area 2;
a failure to detect a target reference signal of the first working area;
a failure to detect target reference signals of all working areas configured for the terminal; and
a success in receiving a paging message transmitted by a network-side device.

Optionally, a first measurement result of the target reference signal is greater than or equal to a first threshold;
or a second measurement result of the target reference signal is less than or equal to a second threshold.

For example, a reference signal received power (Reference Signal Received Power, RSRP), a reference signal received quality (Reference Signal Received Quality, RSRQ), or a signal to interference and noise ratio (Signal to Interference and Noise Ratio, SINR) is greater than or equal to the first threshold; and
a received signal strength indicator (Received Signal Strength Indicator, RSSI), a channel occupancy rate (Channel Occupancy Rate, COR), or a channel occupancy time (Channel Occupancy Time, COT) is less than or equal to the second threshold.

Optionally, the paging message is a paging message that triggers change of a working area.

Optionally, the performing an operation of changing the first working area includes at least one of the following:
transmitting change information to notify a network-side device that the working area of the terminal is changed;
searching for a second working area, the second working area being a working area different from the first working area, for example, a network side or protocol stipulates that a working area 1 and a working area 2 are configured to the terminal, the terminal currently works in the working area 1, and when the terminal receives a paging message, the terminal starts to detect the working area 2;
searching for a first cell capable of initiating connection establishment, for example, performing cell search, performing cell signal measurement, and/or reading system information of cells; and
searching for a second cell capable of being camped on.

Optionally, the change information includes at least one of the following:
an identifier of the first working area before change;
an identifier of the second working area after change; and
geographical location information of the terminal.

Further optionally, the geographical location information includes at least one of the following:
a tracking area TA;
a cell identifier;
a frequency identifier;
a public land mobile network PLMN identifier;
a coordinate location;
a speed of the terminal; and
a movement direction of the terminal.

Optionally, after the performing an operation of changing the first working area, at least one of the following operations is further performed:
reselecting the second working area or a target cell;
camping on the second working area or the target cell; and
initiating a connection establishment process in the second working area or the target cell,
where the target cell is the first cell or the second cell.

Optionally, the method for changing a working area in this embodiment of this application further includes:
changing a connection status of the terminal.

For example, the terminal changes from an RRC inactive state to an RRC idle state.

Optionally, the method for changing a working area in this embodiment of this application further includes:
controlling a working mode of the terminal to change from a first working mode to a second working mode,
where the first working mode is a working mode supported by the first working area, the second working mode is a working mode supported by a second working area, and the second working area is a working area after change.

For example, the first working area does not support reading system information, while the second working area supports reading system information, then the terminal can read system information in the second working area after changing from the first working area to the second working area.

In the method for changing a working area in this embodiment of this application, the network side configures a plurality of different working areas to the UE, and in a case that the trigger event is satisfied, the process of changing the working area may be implemented, so that the UE can be supported to work in different working areas and to switch between different working modes in different working areas.

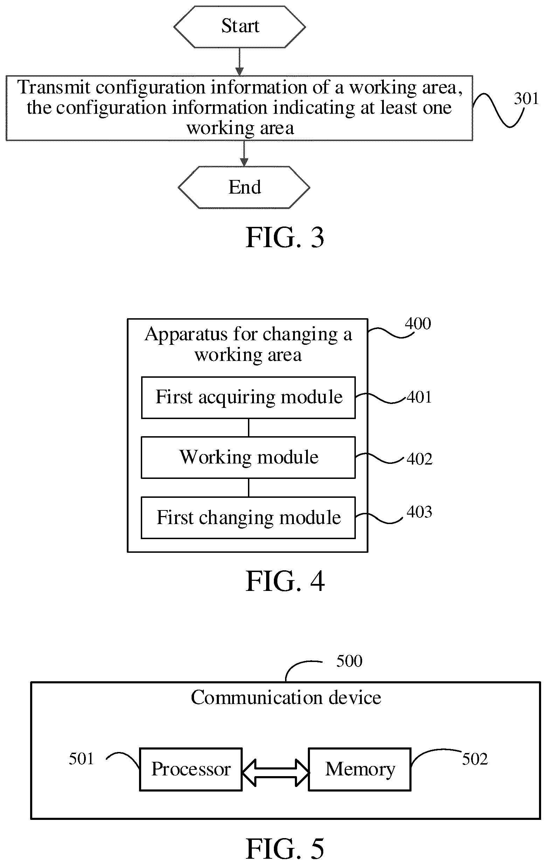

As shown in FIG. 3, an embodiment of this application further provides a method for changing a working area, applicable to a network-side device, the method including the following steps.

Step 301. Transmit configuration information of a working area, the configuration information indicating at least one working area.

The configuration information may be configured through dedicated signaling or broadcast signaling.

Use of the working area may include at least one of the following:
receiving a paging message;
cell selection or reselection (for example, UE only performs cell selection and reselection among cells configured in the specific working area);
camping on for UE (for example, UE only camps on cells configured in the specific working area); and
cell measurement (for example, UE only measures cells or frequencies configured in the specific working area).

In this embodiment of this application, configuration information of a working area is transmitted to enable a terminal to work in a first working area indicated by the configuration information, and in a case that a trigger event is satisfied, an operation of changing the first working area is performed, so that it can be ensured that the terminal can change the working area when moving, thereby achieving the purpose of supporting terminal mobility. In addition, when working in the working area indicated by the configuration information, the terminal can only perform cell measurement, cell selection, or cell reselection in cells configured in the working area, without performing cell selection/reselection or cell measurement frequently on a large number of small cells, thereby reducing power consumption of the terminal when moving.

Optionally, the configuration information includes at least one of the following:
at least one frequency identifier;
resource location information for a reference signal corresponding to a frequency;
a subcarrier spacing corresponding to a frequency;
transmission location information for a paging message; and
at least one working area identifier.

Optionally, the at least one working area identifier satisfies at least one of the following:
one of the at least one working area identifier corresponding to at least one frequency identifier;
one of the at least one working area identifier corresponding to resource location information for at least one reference signal; and
one of the at least one working area identifier corresponding to transmission location information for at least one paging message.

Optionally, the reference signal includes at least one of the following types:
a synchronous signal block; and
a channel state information-reference signaling.

Optionally, the reference signal includes information content of an identifier of a working area.

The configuration information in this embodiment of this application has been already described in detail in the above method embodiment at the terminal side, and details are not described herein again.

In this embodiment of this application, configuration information of a working area is transmitted to enable a terminal to work in a first working area indicated by the configuration information, and in a case that a trigger event is satisfied, an operation of changing the first working area is performed, so that it can be ensured that the terminal can change the working area when moving, thereby achieving the purpose of supporting terminal mobility. In addition, when working in the working area indicated by the configuration information, the terminal can only perform cell measurement, cell selection, or cell reselection in cells configured in the working area, without performing cell selection/reselection or cell measurement frequently on a large number of small cells, thereby reducing power consumption of the terminal when moving.

It is to be noted that, the method for changing a working area provided in the embodiments of this application may be performed by an apparatus for changing a working area or a control module in the apparatus for changing a working area for performing the method for changing a working area. In an embodiment of this application, an apparatus for changing a working area performing the method for changing a working area is used as an example to describe the apparatus for changing a working area provided in the embodiments of this application.

As shown in FIG. 4, an embodiment of this application provides an apparatus 400 for changing a working area, applicable to a terminal, the apparatus including:
a first acquiring module 401, configured to acquire configuration information of a working area;
a working module 402, configured to work in a first working area according to the configuration information, the first working area being a working area in at least one working area indicated by the configuration information; and
a first changing module 403, configured to perform an operation of changing the first working area in a case that a trigger event is satisfied.

According to the apparatus for changing a working area in this embodiment of this application, the configuration information includes at least one of the following:
at least one frequency identifier;
resource location information for a reference signal corresponding to a frequency;
a subcarrier spacing corresponding to a frequency;
transmission location information for a paging message; and
at least one working area identifier.

According to the apparatus for changing a working area in this embodiment of this application, the at least one working area identifier satisfies at least one of the following:
one of the at least one working area identifier corresponding to at least one frequency identifier;
one of the at least one working area identifier corresponding to resource location information for at least one reference signal; and
one of the at least one working area identifier corresponding to transmission location information for at least one paging message.

According to the apparatus for changing a working area in this embodiment of this application, the configuration information is configured through dedicated signaling or broadcast signaling.

According to the apparatus for changing a working area in this embodiment of this application, the reference signal includes at least one of the following types:
a synchronous signal block; and
a channel state information-reference signaling.

According to the apparatus for changing a working area in this embodiment of this application, the reference signal includes information content of an identifier of a working area.

According to the apparatus for changing a working area in this embodiment of this application, the working module is configured to perform at least one of the following operations:
receiving a paging message in the first working area;
performing cell selection or reselection in the first working area;
performing camping in the first working area;
performing cell measurement in the first working area;
performing initial access in the first working area; and
reading system information in the first working area.

According to the apparatus for changing a working area in this embodiment of this application, the trigger event includes at least one of the following:
a mismatch between information content of an identifier of a working area included in a detected target reference signal and information content of an identifier of the first working area,
a mismatch between information content of an identifier of a working area included in a detected target reference signal and information content of identifiers of all working areas in the configuration information;
a failure to detect a target reference signal of the first working area;
a failure to detect target reference signals of all working areas configured for the terminal; and
a success in receiving a paging message transmitted by a network-side device.

According to the apparatus for changing a working area in this embodiment of this application, a first measurement result of the target reference signal is greater than or equal to a first threshold;
or a second measurement result of the target reference signal is less than or equal to a second threshold.

According to the apparatus for changing a working area in this embodiment of this application, the paging message is a paging message that triggers change of a working area.

According to the apparatus for changing a working area in this embodiment of this application, the first changing module is configured to perform at least one of the following operations:
transmitting change information to notify a network-side device that the working area of the terminal is changed;
searching for a second working area, the second working area being a working area different from the first working area;
searching for a first cell capable of initiating connection establishment; and
searching for a second cell capable of being camped on.

According to the apparatus for changing a working area in this embodiment of this application, the change information includes at least one of the following:
an identifier of the first working area before change;
an identifier of the second working area after change; and
geographical location information of the terminal.

According to the apparatus for changing a working area in this embodiment of this application, the geographical location information includes at least one of the following:
a tracking area TA;
a cell identifier;
a frequency identifier;
a public land mobile network PLMN identifier;
a coordinate location;
a speed of the terminal; and
a movement direction of the terminal.

The apparatus for changing a working area in this embodiment of this application further includes:
a processing module, configured to perform, after the first changing module performs an operation of changing the first working area, at least one of the following operations:
reselecting the second working area or a target cell;
camping on the second working area or the target cell; and
initiating a connection establishment process in the second working area or the target cell,
where the target cell is the first cell or the second cell.

The apparatus for changing a working area in this embodiment of this application further includes:
a second changing module, configured to change a connection status of the terminal.

The apparatus for changing a working area in this embodiment of this application further includes:
a control module, configured to control a working mode of the terminal to change from a first working mode to a second working mode,
where the first working mode is a working mode supported by the first working area, the second working mode is a working mode supported by a second working area, and the second working area is a working area after change.

According to the apparatus for changing a working area in this embodiment of this application, acquire configuration information of a working area; work in a first working area according to the configuration information; and perform an operation of changing the first working area in a case that a trigger event is satisfied. Therefore, it can be ensured that the terminal can change the working area when moving, thereby achieving the purpose of supporting terminal mobility. In addition, when working in a working area indicated by configuration information, the terminal can only perform cell measurement, cell selection, or cell reselection in cells configured in the working area, without performing cell selection/reselection or cell measurement frequently on a large number of small cells, thereby reducing power consumption of the terminal when moving.

In the embodiments of this application, the apparatus for changing a working area may be an apparatus, or may be a component, an integrated circuit, or a chip in a terminal. The apparatus may be a mobile terminal or a non-mobile terminal. For example, the mobile terminal may include, but is not limited to, the types of the terminal 11 listed above, and the non-mobile terminal may be a server, a network attached storage (Network Attached Storage, NAS), a personal computer (personal computer, PC), a television (television, TV), a teller machine, a self-service machine, or the like. This is not specifically limited in the embodiments of this application.

The apparatus for changing a working area in the embodiments of this application may be an apparatus with an operating system. The operating system may be an Android (Android) operating system, may be an iOS operating system, or may be another possible operating system. This is not specifically limited in the embodiments of this application.

The apparatus for changing a working area provided in the embodiments of this application can implement all processes performed by the method embodiments in FIG. 2, and can achieve the same technical effects. To avoid repetition, details are not described herein again.

As shown in FIG. 5, an embodiment of this application further provides a communication device 500, including a processor 501, a memory 502, and a program or instruction stored in the memory 502 and executable on the processor 501. For example, when the communication device 500 is a terminal, the program or instruction is executed on the processor 501 to implement all processes of the above embodiments of the method for changing a working area applicable to the terminal, which can achieve the same technical effects. When the communication device 500 is a network-side device, the program or instruction is executed on the processor 501 to implement all processes of the above embodiments of the method for changing a working area applicable to the network-side device, which can achieve the same technical effects. To avoid repetition, details are not described herein again.

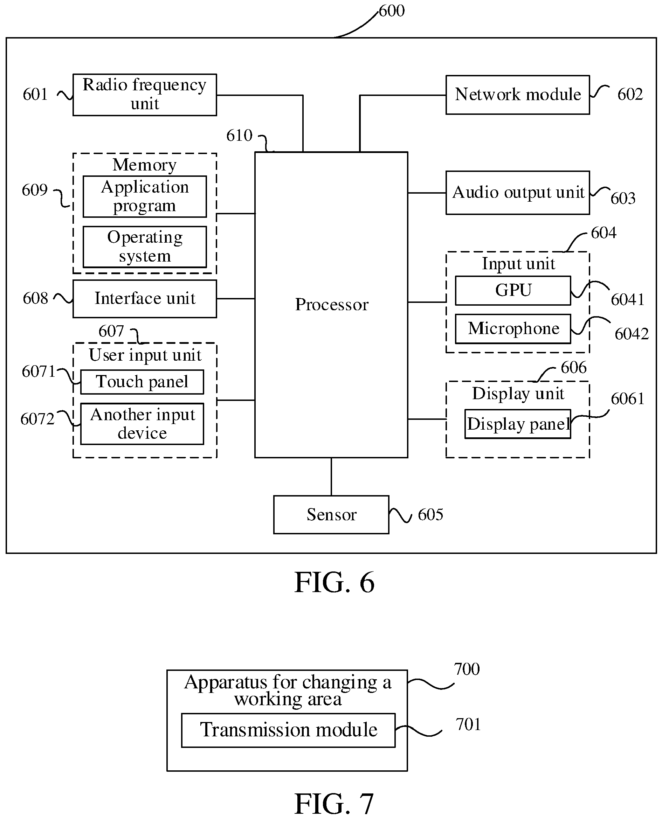

FIG. 6 is a schematic diagram of a hardware structure of a terminal according to an embodiment of this application.

A terminal 600 includes, but is not limited to: components such as a radio frequency unit 601, a network module 602, an audio output unit 603, an input unit 604, a sensor 605, a display unit 606, a user input unit 607, an interface unit 608, a memory 609, and a processor 610.

A person skilled in the art may understand that the terminal 600 may also include a power supply (such as a battery) for supplying power to the components. The power supply may be logically connected to the processor 610 by a power management system, thereby achieving such functions as charging, discharging, and power consumption management by using the power management system. The terminal structure shown in FIG. 6 does not constitute a limitation to the terminal, and the terminal may include more or fewer components than those shown in the figure, or some components may be combined, or a different component deployment may be used. Details are not described herein.

It should be understood that in this embodiment of this application, the input unit 604 may include a graphics processing unit (Graphics Processing Unit, GPU) 6041 and a microphone 6042. The graphics processing unit 6041 performs processing on image data of a static picture or a video that is obtained by an image acquisition apparatus (for example, a camera) in a video acquisition mode or an image acquisition mode. The display unit 606 may include a display panel 6061. The display panel 6061 may be configured in a form of a liquid crystal display or an organic light-emitting diode. The user input unit 607 includes a touch panel 6071 and another input device 6072. The touch panel 6071 is also referred to as a touchscreen. The touch panel 6071 may include two parts: a touch detection apparatus and a touch controller. The another input device 6072 may include, but is not limited to, a physical keyboard, a functional key (such as a volume control key or a switch key), a track ball, a mouse, and a joystick. Details are not described herein.

In this embodiment of this application, the radio frequency unit 601 receives downlink data from a network-side device and transmits the downlink data to the processor 610 for processing; and transmits uplink data to the network-side device. Generally, the radio frequency unit 601 includes, but is not limited to, an antenna, at least one amplifier, a transceiver, a coupler, a low noise amplifier, a duplexer, and the like.

The memory 609 is configured to store a software program and various data. The memory 609 may mainly include a program/instruction storage area and a data storage area. The program/instruction storage area may store an operating system, an application program/instruction required by at least one function (such as a sound playback function and an image display function), and the like. In addition, the memory 609 may include a high-speed random access memory, and may also include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one magnetic disk storage device, a flash memory device, or other non-volatile solid-state storage devices.

The processor 610 may include one or more processing units. Optionally, the processor 610 may integrate an application processor and a modem processor. The application processor mainly processes an operating system, a user interface, an application program or instruction, and the like. The modem processor mainly processes wireless communication, for example, a baseband processor. It may be understood that the above modem processor may not be integrated into the processor 610.

The processor 610 is configured to acquire configuration information of a working area; work in a first working area according to the configuration information, the first working area being a working area in at least one working area indicated by the configuration information; and perform an operation of changing the first working area in a case that a trigger event is satisfied.

According to the terminal in this embodiment of this application, acquire configuration information of a working area; work in a first working area according to the configuration information; and perform an operation of changing the first working area in a case that a trigger event is satisfied. Therefore, it can be ensured that the terminal can change the working area when moving, thereby achieving the purpose of supporting terminal mobility. In addition, when working in a working area indicated by configuration information, the terminal can only perform cell measurement, cell selection, or cell reselection in cells configured in the working area, without performing cell selection/reselection or cell measurement frequently on a large number of small cells, thereby reducing power consumption of the terminal when moving.

Optionally, the configuration information includes at least one of the following:
at least one frequency identifier;
resource location information for a reference signal corresponding to a frequency;
a subcarrier spacing corresponding to a frequency;
transmission location information for a paging message; and
at least one working area identifier.

Optionally, the processor 610 is further configured to perform at least one of the following:
one of the at least one working area identifier corresponding to at least one frequency identifier;
one of the at least one working area identifier corresponding to resource location information for at least one reference signal; and
one of the at least one working area identifier corresponding to transmission location information for at least one paging message.

Optionally, the configuration information is configured through dedicated signaling or broadcast signaling.

Optionally, the reference signal includes at least one of the following types:
a synchronous signal block; and
a channel state information-reference signaling.

Optionally, the reference signal includes information content of an identifier of a working area.

Optionally, the working in a first working area includes at least one of the following:
receiving a paging message in the first working area;
performing cell selection or reselection in the first working area;
performing camping in the first working area;
performing cell measurement in the first working area;
performing initial access in the first working area; and
reading system information in the first working area.

Optionally, the trigger event includes at least one of the following:
a mismatch between information content of an identifier of a working area included in a detected target reference signal and information content of an identifier of the first working area,
a mismatch between information content of an identifier of a working area included in a detected target reference signal and information content of identifiers of all working areas in the configuration information;
a failure to detect a target reference signal of the first working area;
a failure to detect target reference signals of all working areas configured for the terminal; and
a success in receiving a paging message transmitted by a network-side device.

Optionally, a first measurement result of the target reference signal is greater than or equal to a first threshold;
or a second measurement result of the target reference signal is less than or equal to a second threshold.

Optionally, the paging message is a paging message that triggers change of a working area.

Optionally, the processor 610 is further configured to perform at least one of the following operations:
transmitting change information to notify a network-side device that the working area of the terminal is changed;
searching for a second working area, the second working area being a working area different from the first working area;
searching for a first cell capable of initiating connection establishment; and
searching for a second cell capable of being camped on.

Optionally, the change information includes at least one of the following:
an identifier of the first working area before change;
an identifier of the second working area after change; and
geographical location information of the terminal.

Optionally, the geographical location information includes at least one of the following:
a tracking area TA;
a cell identifier;
a frequency identifier;
a public land mobile network PLMN identifier;
a coordinate location;
a speed of the terminal; and
a movement direction of the terminal.

Optionally, the processor 610 is further configured to perform at least one of the following operations:
reselecting the second working area or a target cell;
camping on the second working area or the target cell; and
initiating a connection establishment process in the second working area or the target cell,
where the target cell is the first cell or the second cell.

Optionally, the processor 610 is further configured to change a connection status of the terminal.

Optionally, the processor 610 is further configured to control a working mode of the terminal to change from a first working mode to a second working mode,
where the first working mode is a working mode supported by the first working area, the second working mode is a working mode supported by a second working area, and the second working area is a working area after change.

According to the terminal in this embodiment of this application, acquire configuration information of a working area; work in a first working area according to the configuration information; and perform an operation of changing the first working area in a case that a trigger event is satisfied. Therefore, it can be ensured that the terminal can change the working area when moving, thereby achieving the purpose of supporting terminal mobility. In addition, when working in a working area indicated by configuration information, the terminal can only perform cell measurement, cell selection, or cell reselection in cells configured in the working area, without performing cell selection/reselection or cell measurement frequently on a large number of small cells, thereby reducing power consumption of the terminal when moving.

As shown in FIG. 7, an embodiment of this application further provides an apparatus 700 for changing a working area, applicable to a network-side device, the apparatus including:
a transmission module 701, configured to transmit configuration information of a working area, the configuration information indicating at least one working area.

According to the apparatus for changing a working area in this embodiment of this application, the configuration information includes at least one of the following:
at least one frequency identifier;
resource location information for a reference signal corresponding to a frequency;
a subcarrier spacing corresponding to a frequency;
transmission location information for a paging message; and
at least one working area identifier.

According to the apparatus for changing a working area in this embodiment of this application, the at least one working area identifier satisfies at least one of the following:
one of the at least one working area identifier corresponding to at least one frequency identifier;
one of the at least one working area identifier corresponding to resource location information for at least one reference signal; and
one of the at least one working area identifier corresponding to transmission location information for at least one paging message.

According to the apparatus for changing a working area in this embodiment of this application, the configuration information is configured through dedicated signaling or broadcast signaling.

According to the apparatus for changing a working area in this embodiment of this application, the reference signal includes at least one of the following types:
a synchronous signal block; and
a channel state information-reference signaling.

According to the apparatus for changing a working area in this embodiment of this application, the reference signal includes information content of an identifier of a working area.

According to the apparatus for changing a working area in this embodiment of this application, use of the working area includes at least one of the following:
receiving a paging message;
cell selection or reselection;
terminal camping; and
cell measurement.

According to the apparatus for changing a working area in this embodiment of this application, configuration information of a working area is transmitted to enable a terminal to work in a first working area indicated by the configuration information, and in a case that a trigger event is satisfied, an operation of changing the first working area is performed, so that it can be ensured that the terminal can change the working area when moving, thereby achieving the purpose of supporting terminal mobility. In addition, when working in the working area indicated by the configuration information, the terminal can only perform cell measurement, cell selection, or cell reselection in cells configured in the working area, without performing cell selection/reselection or cell measurement frequently on a large number of small cells, thereby reducing power consumption of the terminal when moving.

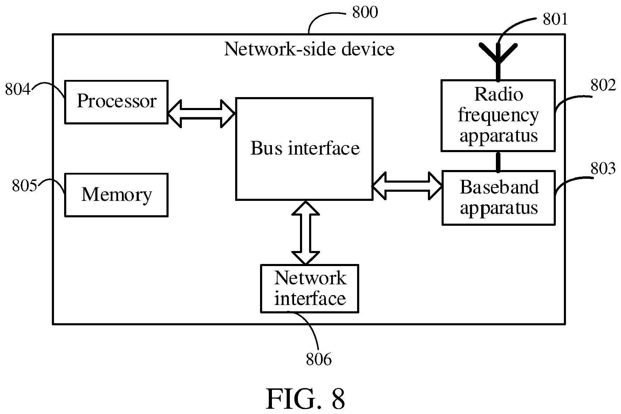

Specifically, an embodiment of this application further provides a network-side device. As shown in FIG. 8, the network-side device 800 includes: an antenna 801, a radio frequency apparatus 802, and a baseband apparatus 803. The antenna 801 is connected to the radio frequency apparatus 802. In an uplink direction, the radio frequency apparatus 802 receives information through the antenna 801, and transmits the received information to the baseband apparatus 803 for processing. In a downlink direction, the baseband apparatus 803 processes the information to be transmitted, and transmits the information to the radio frequency apparatus 802. The radio frequency apparatus 802 processes the information received and transmits the processed information through the antenna 801.

The frequency band processing apparatus may be located in the baseband apparatus 803. The method performed by the network-side device in the above embodiments may be implemented in the baseband apparatus 803. The baseband apparatus 803 includes a processor 804 and a memory 805.

The baseband apparatus 803 may include, for example, at least one baseband plate. A plurality of chips are disposed on the baseband plate. As shown in FIG. 8, one of the plurality of chips is, for example, the processor 804, and is connected to the memory 805 to call a program in the memory 805, to perform the operations of the network-side device shown in the above method embodiments.

The baseband apparatus 803 may further include a network interface 806, configured to exchange information with the radio frequency apparatus 802. The interface is, for example, a common public radio interface (common public radio interface, CPRI).

Specifically, the network-side device in this embodiment of this application further includes: an instruction or program stored in the memory 805 and executable on the processor 804. The processor 804 calls the instruction or program in the memory 805 to implement the method performed by all modules shown in FIG. 7, and achieves the same technical effects. To avoid repetition, details are not described herein again.

An embodiment of this application further provides a readable storage medium, storing a program or instruction, the computer program or instruction, when executed on a processor, implementing the processes of the above embodiments of the method for changing a working area and achieving the same technical effects. To avoid repetition, details are not described herein again.

The processor is a processor in the terminal in the above embodiments. The readable storage medium includes a computer-readable storage medium, such as a computer read-only memory (Read-Only Memory, ROM), a random access memory (Random Access Memory, RAM), a magnetic disk, or an optical disc.

An embodiment of this application also provides a chip. The chip includes a processor and a communication interface. The communication interface is coupled to the processor. The processor is configured to execute a program or instruction to implement the processes of the above embodiments of the method for changing a working area and achieve the same technical effects. To avoid repetition, details are not described herein again.

It should be understood that, the chip mentioned in this embodiment of this application may also be referred to as a system-level chip, a system chip, a chip system, a system on chip, or the like.

It is to be noted that, the terms "include", "comprise", or any other variation thereof in this specification is intended to cover a non-exclusive inclusion. Therefore, in the context of a process, method, object, or apparatus that includes a series of elements, the process, method, object, or apparatus not only includes such elements, but also includes other elements not specified expressly, or may include inherent elements of the process, method, object, or apparatus. Without more limitations, elements defined by the sentence "including one" does not exclude that there are still other same elements in the processes, methods, objects, or apparatuses. In addition, it is to be noted that the scopes of the method and apparatus in the implementations of this application are not limited to implementing functions in an order shown or discussed, and may further include implementing functions in a substantially simultaneous manner or in a reverse order according to the functions involved. For example, the described method may be performed in an order different from that described, and various steps may also be added, omitted, or combined. Moreover, features described according to some examples may also be combined in other examples.

Through the descriptions of the above implementations, a person skilled in the art may clearly understand that the method according to the above embodiments may be implemented by means of software and a necessary general hardware platform, and certainly, may alternatively be implemented by hardware, but in many cases, the former manner is a better implementation. Based on such an understanding, the technical solutions of this application essentially or the part contributing to the existing technologies may be implemented in the form of a software product. The computer software product is stored in a storage medium (such as a ROM/RAM, a magnetic disk, or an optical disc), and includes several instructions for instructing a terminal (which may be a mobile phone, a computer, a server, a network device, or the like) to perform the method described in the embodiments of this application.

The embodiments of this application have been described above with reference to the accompanying drawings. This application is not limited to the specific implementations described above, and the specific implementations described above are merely exemplary and not limitative. A person of ordinary skill in the art may make various variations under the teaching of this application without departing from the spirit of this application and the protection scope of the claims, and such variations shall fall within the protection scope of this application.

## Claims

1. A method for changing a working area, applicable to a terminal and comprising:
acquiring configuration information of a working area;
working in a first working area according to the configuration information, the first working area being a working area in at least one working area indicated by the configuration information; and
performing an operation of changing the first working area in a case that a trigger event is satisfied.

2. The method for changing a working area according to claim 1, wherein the configuration information comprises at least one of the following:
at least one frequency identifier;
resource location information for a reference signal corresponding to a frequency;
a subcarrier spacing corresponding to a frequency;
transmission location information for a paging message; and
at least one working area identifier.

3. The method for changing a working area according to claim 2, wherein the at least one working area identifier satisfies at least one of the following:
one of the at least one working area identifier corresponding to at least one frequency identifier;
one of the at least one working area identifier corresponding to resource location information for at least one reference signal; and
one of the at least one working area identifier corresponding to transmission location information for at least one paging message.

4. The method for changing a working area according to claim 2, wherein the reference signal comprises information content of an identifier of a working area.

5. The method for changing a working area according to claim 1, wherein the working in a first working area comprises at least one of the following:
receiving a paging message in the first working area;
performing cell selection or reselection in the first working area;
performing camping in the first working area;
performing cell measurement in the first working area;
performing initial access in the first working area; and
reading system information in the first working area.

6. The method for changing a working area according to claim 1, wherein the trigger event comprises at least one of the following:
a mismatch between information content of an identifier of a working area comprised in a detected target reference signal and information content of an identifier of the first working area;
a mismatch between information content of an identifier of a working area comprised in a detected target reference signal and information content of identifiers of all working areas in the configuration information;
a failure to detect a target reference signal of the first working area;
a failure to detect target reference signals of all working areas configured for the terminal; and
a success in receiving a paging message transmitted by a network-side device.

7. The method for changing a working area according to claim 6, wherein a first measurement result of the target reference signal is greater than or equal to a first threshold;
or a second measurement result of the target reference signal is less than or equal to a second threshold.

8. The method for changing a working area according to claim 6, wherein the paging message is a paging message that triggers change of a working area.

9. The method for changing a working area according to claim 1, wherein the performing an operation of changing the first working area comprises at least one of the following:
transmitting change information to notify a network-side device that the working area of the terminal is changed;
searching for a second working area, the second working area being a working area different from the first working area;
searching for a first cell capable of initiating connection establishment; and
searching for a second cell capable of being camped on.

10. The method for changing a working area according to claim 9, wherein the change information comprises at least one of the following:
an identifier of the first working area before change;
an identifier of the second working area after change; and
geographical location information of the terminal.

11. The method for changing a working area according to claim 9, further comprising at least one of the following operations:
reselecting the second working area or a target cell;
camping on the second working area or the target cell; and
initiating a connection establishment process in the second working area or the target cell,
wherein the target cell is the first cell or the second cell.

12. The method for changing a working area according to claim 1, further comprising:
changing a connection status of the terminal.

13. The method for changing a working area according to claim 1, further comprising:
controlling a working mode of the terminal to change from a first working mode to a second working mode,
wherein the first working mode is a working mode supported by the first working area, the second working mode is a working mode supported by a second working area, and the second working area is a working area after change.

14. A method for changing a working area, applicable to a network-side device and comprising:
transmitting configuration information of a working area, the configuration information indicating at least one working area.

15. The method for changing a working area according to claim 14, wherein the configuration information comprises at least one of the following:
at least one frequency identifier;
resource location information for a reference signal corresponding to a frequency;
a subcarrier spacing corresponding to a frequency;
transmission location information for a paging message; and
at least one working area identifier.

16. The method for changing a working area according to claim 15, wherein the at least one working area identifier satisfies at least one of the following:
one of the at least one working area identifier corresponding to at least one frequency identifier;
one of the at least one working area identifier corresponding to resource location information for at least one reference signal; and
one of the at least one working area identifier corresponding to transmission location information for at least one paging message.

17. The method for changing a working area according to claim 15, wherein the reference signal comprises information content of an identifier of a working area.

18. The method for changing a working area according to claim 14, wherein use of the working area comprises at least one of the following:
receiving a paging message;
cell selection or reselection;
terminal camping; and
cell measurement.

19. An apparatus for changing a working area, applicable to a terminal and comprising:
a first acquiring module, configured to acquire configuration information of a working area;
a working module, configured to work in a first working area according to the configuration information, the first working area being a working area in at least one working area indicated by the configuration information; and
a first changing module, configured to perform an operation of changing the first working area in a case that a trigger event is satisfied.

20. The apparatus for changing a working area according to claim 19, wherein the configuration information comprises at least one of the following:
at least one frequency identifier;
resource location information for a reference signal corresponding to a frequency;
a subcarrier spacing corresponding to a frequency;
transmission location information for a paging message; and
at least one working area identifier.

21. The apparatus for changing a working area according to claim 20, wherein the at least one working area identifier satisfies at least one of the following:
one of the at least one working area identifier corresponding to at least one frequency identifier;
one of the at least one working area identifier corresponding to resource location information for at least one reference signal; and
one of the at least one working area identifier corresponding to transmission location information for at least one paging message.

22. The apparatus for changing a working area according to claim 19, wherein the working module is configured to perform at least one of the following operations:
receiving a paging message in the first working area;
performing cell selection or reselection in the first working area;
performing camping in the first working area;
performing cell measurement in the first working area;
performing initial access in the first working area; and
reading system information in the first working area.

23. The apparatus for changing a working area according to claim 19, wherein the trigger event comprises at least one of the following:
a mismatch between information content of an identifier of a working area comprised in a detected target reference signal and information content of an identifier of the first working area;
a mismatch between information content of an identifier of a working area comprised in a detected target reference signal and information content of identifiers of all working areas in the configuration information;
a failure to detect a target reference signal of the first working area;
a failure to detect target reference signals of all working areas configured for the terminal; and
a success in receiving a paging message transmitted by a network-side device.

24. The apparatus for changing a working area according to claim 19, wherein the first changing module is configured to perform at least one of the following operations:
transmitting change information to notify a network-side device that the working area of the terminal is changed;
searching for a second working area, the second working area being a working area different from the first working area;
searching for a first cell capable of initiating connection establishment; and
searching for a second cell capable of being camped on.

25. A terminal, comprising a processor, a memory, and a program or instruction stored in the memory and executable on the processor, the program or instruction, when executed on the processor, implementing steps of the method for changing a working area according to any one of claims 1 to 13.

26. An apparatus for changing a working area, applicable to a network-side device and comprising:
a transmission module, configured to transmit configuration information of a working area, the configuration information indicating at least one working area.

27. The apparatus for changing a working area according to claim 26, wherein the configuration information comprises at least one of the following:
at least one frequency identifier;
resource location information for a reference signal corresponding to a frequency;
a subcarrier spacing corresponding to a frequency;
transmission location information for a paging message; and
at least one working area identifier.

28. The apparatus for changing a working area according to claim 27, wherein the at least one working area identifier satisfies at least one of the following:
one of the at least one working area identifier corresponding to at least one frequency identifier;
one of the at least one working area identifier corresponding to resource location information for at least one reference signal; and
one of the at least one working area identifier corresponding to transmission location information for at least one paging message.

29. The apparatus for changing a working area according to claim 26, wherein use of the working area comprises at least one of the following:
receiving a paging message;
cell selection or reselection;
terminal camping; and
cell measurement.

30. A network-side device, comprising a processor, a memory, and a program or instruction stored in the memory and executable on the processor, the program or instruction, when executed on the processor, implementing steps of the method for changing a working area according to any one of claims 14 to 18.

31. A readable storage medium, storing a program or instruction, the program or instruction, when executed on a processor, implementing steps of the method for changing a working area according to any one of claims 1 to 13 or steps of the method for changing a working area according to any one of claims 14 to 18.

32. A chip, comprising a processor and a communication interface, the communication interface being coupled to the processor, and the processor being configured to execute a program or instruction to implement steps of the method for changing a working area according to any one of claims 1 to 13 or steps of the method for changing a working area according to any one of claims 14 to 18.
